Europäisches Patentamt

European Patent Office

Office européen des brevets

(11) Veröffentlichungsnummer: **0 379 918**
**A2**

(12) **EUROPÄISCHE PATENTANMELDUNG**

(21) Anmeldenummer: **90100729.4**

(22) Anmeldetag: **15.01.90**

(51) Int. Cl.⁵: **G01C 15/00**

(30) Priorität: **24.01.89 CS 455/89**

(43) Veröffentlichungstag der Anmeldung:
**01.08.90 Patentblatt 90/31**

(84) Benannte Vertragsstaaten:
**CH DE FR GB LI SE**

(71) Anmelder: **PRVNI BRNENSKA STROJIRNA KONCERNOVY PODNIK**
**Olomoucka 7/9**
**Brno(CS)**

(72) Erfinder: **Fiala, Stanislav, Dipl.-Ing.**
**Babickova 40**
**Brno(CS)**
Erfinder: **Bocek, Vlastislav**
**Uvoz 116**
**Brno(CS)**

(74) Vertreter: **Patentanwälte Beetz sen. - Beetz jun. Timpe - Siegfried - Schmitt-Fumian- Mayr**
**Steinsdorfstrasse 10**
**D-8000 München 22(DE)**

(54) **Traghalterung für ein Messgerät, insbesondere für ein Laserpeilgerät.**

(57) Gegenstand der Erfindung ist eine Traghalterung zur Einspannung und Positionierung einer Absteckvorrichtung, insbesondere eines Laserpeilgerätes. In der Öffnung einer Grundplatte (1) ist eine Hülse (2) mit ebener Funktionsfläche (22) angeordnet, in die das Peilgerät eingelegt wird. Die Hülse ist durch Druckstücke (32) gehalten, mittels welcher die Hülse durch Stellschrauben (30) zentriert werden kann. Die Grundplatte (1) ruht mit Stützen (4) auf einer Spannfläche (6) und wird mittels Dauermagneten (5) festgelegt. Die Dauermagnete (5) sind an Schrauben (51) befestigt, deren Hub durch Muttern (53) so begrenzt wird, daß die Magnete (5) nicht an der Spannfläche (6) aufliegen.

A-A

FIG.1

## Traghalterung für ein Meßgerät, insbesondere für ein Laserpeilgerät

Die Erfindung betrifft eine Traghalterung für ein Meß-, Richt- oder Peilgerät, insbesondere für ein Laserpeilgerät gemäß dem Oberbegriff des Patentanspruchs 1.

In der Praxis muß der Erzeuger eines Meßstrahles z.B. ein Laserpeilgerät in eine bestimmte Position gebracht werden, die winkelmäßig in der definierten Richtung orientiert ist. Als Beispiel sei die senkrechte Ausrichtung der optischen Achse einer Laserquelle gegenüber einer Grundfläche angeführt, die z.B. die ebene Spannfläche eines Bearbeitungskopfes oder dgl. sein kann. Die hierzu eingesetzten Traghalterungen weisen gewöhnlich einen als Hilfsflügelsupport ausgebildeten Halter auf, in den das Peilgerät eingesetzt wird. Der Traghalter wird dann in T-Nuten in der Spannfläche durch Schrauben eingespannt. Diese bekannten Traghalterungen können die hohen Genauigkeitsanforderungen zur Einstellung des Peilgeräts nicht erfüllen. Darüber hinaus müssen die T-Kopfschrauben in den Nuten der Spannfläche verstellt werden, was manchmal aus Raum- oder Herstellungsgründen unmöglich ist.

Aufgabe der Erfindung ist es, eine gattungsgemäße Traghalterung zu schaffen, welche die notwendige Präzision und Empfindlichkeit bei der Einstellung des Meßstrahlerzeugers gewährleistet und die hochgenau und ausreichend fest auf einer magnetisierbaren Grundfläche positionierbar ist.

Diese Aufgabe wird durch die Merkmale des Patentanspruchs 1 gelöst. Gegenstand der Erfindung ist eine Traghalterung für ein Meß-, Richt- oder Peilgerät, auf deren feinbearbeiteter Grundplatte ein kreuzförmig einstellbarer Halter bzw. Support gelagert ist und die mit Befestigungsmitteln zur Befestigung an einer ebenen magnetisch wirkenden Spannplatte versehen ist. In dem Flügelsupport ist eine Funktionsfläche zur winkelmäßig definierten Einbettung des Peil- bzw. Absteckgeräts gebildet, deren Achse senkrecht zur ebenen Funktionsfläche der Grundplatte verläuft.

Gemäß der Erfindung sind an der Grundplatte an der von der ebenen Funktionsfläche abgekehrten Seite Stützen vorgesehen. Die freien Frontflächen dieser Stützen liegen in einer gemeinsamen Bezugsebene, die parallel zur Funktionsfläche verläuft. In der Grundplatte sind weiter mindestens drei Stellschrauben in senkrechter Richtung zu ihrer Funktionsfläche gelagert. An ihren der Bezugsebene zugekehrten freien Enden befinden sich Dauermagnete mit ebenen Stirnflächen, die einen Pol des Dauermagnets bilden und parallel zu der Bezugsebene liegen, wobei zwischen dem Kopf jeder Stellschraube und der Grundplatte eine Distanzmutter eingelegt ist, die zur Absicherung ihrer Lage auf der Stellschraube zubereitet ist.

Zweckmäßig ist an der Stirnfläche von mindestens zwei Stützen ein Führungseinsatz mit Zylinderkopf lösbar gelagert.

Die erfindungsgemäße Traghalterung bietet den Vorteil, daß ihre genaue Position durch Auflegen auf die Oberfläche einer stählernen Spannplatte eingestellt und anschließend durch die magnetischen Mittel gesichert werden kann. Diese Mittel liegen in ihrer Funktionslage nicht auf der Oberfläche der Spannplatte auf. Diese Konstruktion ermöglicht ein einfaches Lösen der Traghalterung nach Beendigung einer Messung. Bei größerem Gewicht der Traghalterung und des Meßstrahlerzeugers können die Aufstandsflächen der Stützen Führungseinsätze aufweisen, deren Zylinderköpfe der Breite von Nuten in der Grundplatte entsprechen. Dadurch können die ungünstigen Kräfte vor der magnetischen Einspannung des Trägers aufgefangen werden, wenn die Funktionsfläche der Spannplatte vertikal verläuft.

Weitere Besonderheiten ergeben sich aus der folgenden Beschreibung eines Ausführungsbeispiels anhand der Zeichnung. Es zeigen:

Fig. 1 eine Traghalterung im Axialschnitt A-A;

Fig. 2 die Traghalterung nach Fig. 1 in Draufsicht;

Fig. 3 einen vergrößerten Ausschnitt der Traghalterung.

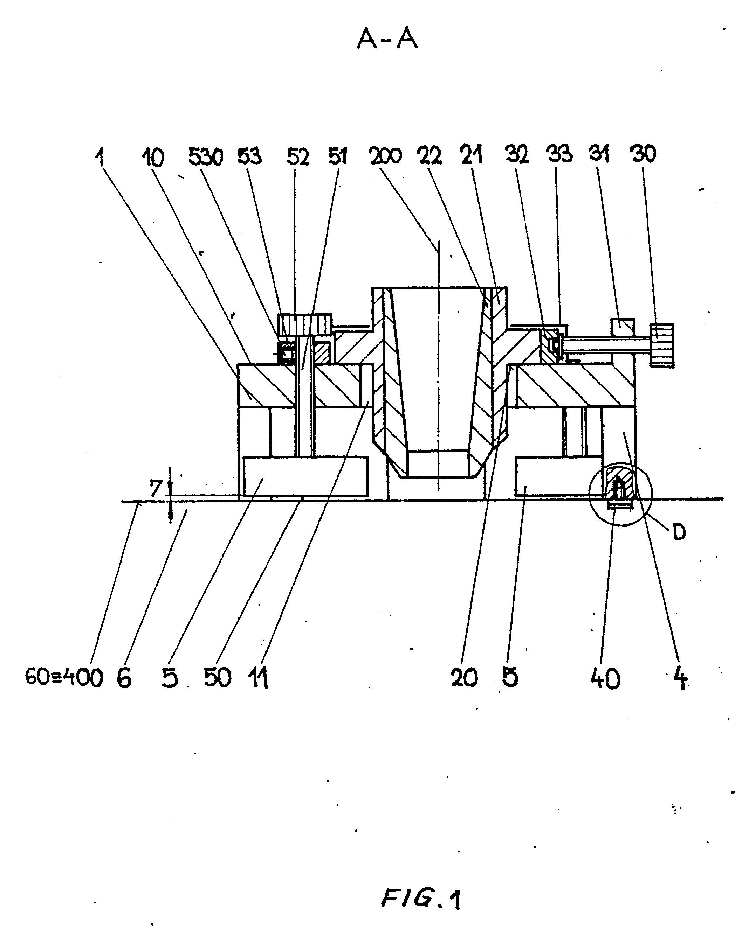

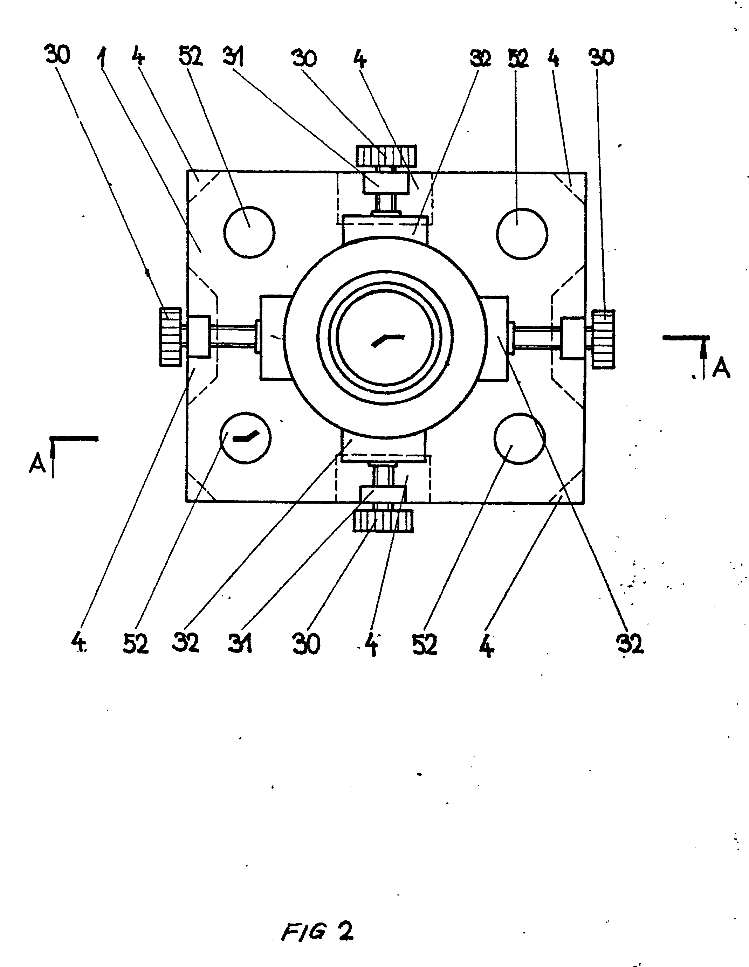

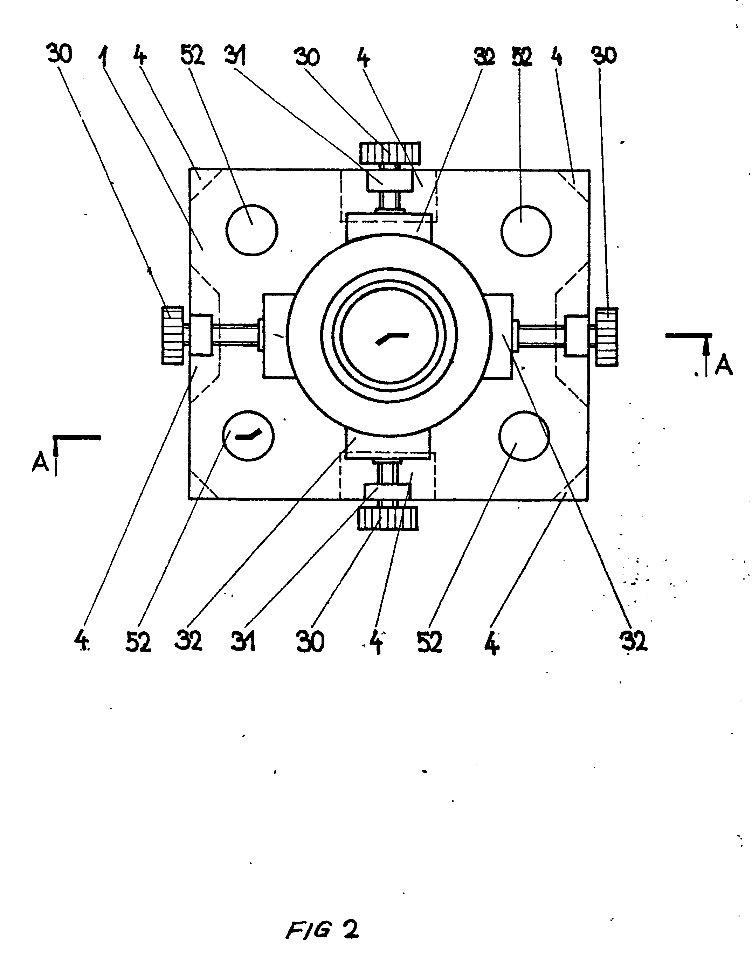

Die dargestellte Traghalterung enthält eine rechteckige Grundplatte 1 mit einer ebenen Oberfläche 10 und einer etwa mittig angeordneten Öffnung 11. Auf der Oberfläche 10 liegt eine Hülse 21 mit einem Radialflansch auf, dessen Unterfläche 20 eine ebene Gleitfläche darstellt. In der Hülse 21 ist eine Patrone 22 mit zylindrischem Außenmantel und konischer nach unten verjüngter Innenfläche achszentriert angeordnet. Die Längsachse 200 der Hülse 21 und der Patrone 22 verläuft senkrecht zur Gleitfläche 20. An der Grundplatte 1 sind aufrechte Ansätze 31 angeformt, in deren zur Gleitfläche 20 parallelen Gewindebohrungen Stellschrauben 30 angeordnet sind. Die paarweise gegenüberliegenden Stellschrauben 30 wirken über Druckstücke 32 mit teilzylindrischer Anlagefläche seitlich auf den Flansch der Hülse 21 ein. Die Druckstücke 32 sind durch Winkelhalter 33 gesichert, welche auch die Achslage der Hülse 2 sicherstellen und welche die Form einer Führungshülse 33 haben können. Wie aus den Fig. 1 und 2 ersichtlich, sind in den Ecken der Grundplatte 1 und in den Mittelteilen ihrer Seiten auf der von ihrer ebenen Funktionsfläche 10 abgekehrten Seite die Stützen 4 mit einstellbaren Schraubfüßen 40 angeordnet, deren Standfläche in einer gemeinsamen Bezugsebene 400 liegt, die zur Funktionsfläche 10 parallel verläuft. Bei dieser Anordnung ist daher auch die Achse 200 der kegelförmigen Funktionsfläche 20 senkrecht zur Bezugsebene 400 ausgerichtet.

In den Diagonalen der Grundplatte 1 sind Stellschrauben 51 senkrecht zur Funktionsfläche 10 angeordnet, an deren oberen Ende ein Drehkopf 52 angeformt und an dessen unterem Ende je ein Dauermagnet 5 befestigt ist. Die Frontflächen 50 der Dauermagnete 5 sind senkrecht zu den Achsen 510 der Stellschrauben 51 und daher parallel zur Bezugsebene 400 der Frontseiten 40. Zwischen dem Drehkopf 52 und der Funktionsfläche 10 ist an jeder Stellschraube 51 eine Distanzmutter 53 mit Sicherungsschrauben 530 vorgesehen.

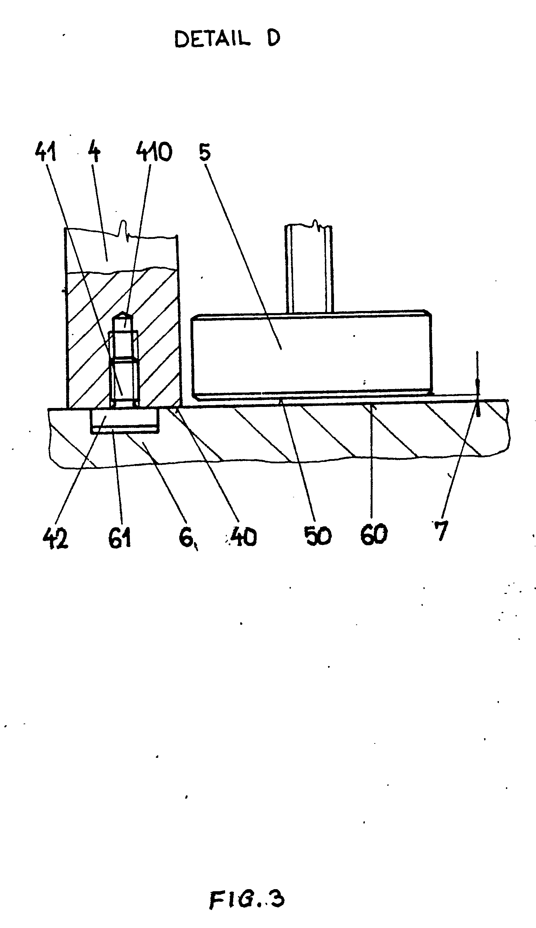

Nach Fig. 3 ist in mindestens einigen Stützen 4 eine Gewindebohrung 410 ausgebildet, in der austauschbare Führungseinsätze 41 mit einem Zylinderkopf 42 eingeschraubt sind. Der Durchmesser des Zylinderkopfes entspricht der Breite einer Nut 61, die in der Spannplatte 6 ausgebildet ist.

Die vorstehend beschriebene Traghalterung für eine Absteckvorrichtung funktioniert wie folgt: Die Stellschrauben 51 werden so weit eingeschraubt, daß die Dauermagnete 5 sich nahe an der Grundplatte 1 befinden. Danach werden in die Gewindebohrungen 410 der Stützen 4 die Führungseinsätze 41 eingeschraubt, deren Kopfdurchmesser 42 der Form der Nuten 61 der Spannplatte 6 entspricht. Die Hülse wird mittels der Justierschrauben 30 annähernd in die Mitte der kreisförmigen Durchgangsöffnung 11 der Grundplatte 1 eingestellt. Daraufhin wird die Traghalterung auf die Oberfläche 60 der Spannplatte 6 gelegt und ein Gerät, z.B. ein Tastgerät, ein Laserpeilgerät wird mit seinem Kegel in die konische Patrone 22 eingesetzt. Nachfolgend wird durch kleine Verschiebungen auf der Oberfläche 60 die Lage der Traghalterung so eingestellt, daß sich der Laserstrahl möglichst nahe der verlangten Lage befindet, z. B. nahe an der Drehachse der Spannplatte 6. Diese Lage wird durch Zustellen der Dauermagnete 5 auf die Spannplatte 6 durch Eindrehen der Stellschrauben 51 insoweit gesichert, daß sich die Distanzmuttern 53 auf der ebenen Oberfläche 10 der Grundplatte 1 abstützen. Die Endlage der Dauermagnete 5 wird mittels der Distanzmuttern 53 so eingestellt, daß zwischen den Stirnflächen 50 der Dauermagnete 5 und der Oberfläche 60 der Spannplatte 6 Luftspalte 7 von 0,2 bis 0,5 mm entstehen. Nach der magnetischen Einspannung der Traghalterung wird mittels der Justierschrauben 30 die Achse 200 der Patrone 22 so eingestellt, daß die Achse eines fiktiven Laserstrahls mit dieser Achse 200, mit der Drehachse der Spannplatte 6 und ggf. auch mit einer anderen Bezugsachse zusammenfällt. Da zur Nachjustierung der Achsenlage 200 nur kleine Seitenverschiebungen ausreichen, können die Druckstücke 32 der Justierschrauben 30 eine zylinderförmige Stoßfläche nach Fig. 1 aufweisen, da sich die Druckstücke umgekehrt gegenüber den Schrauben 30 bewegen können.

Die Traghalterung nach der Erfindung kann mit Vorteil beim Abstecken der Richtung oder Lage mittels eines Lasers bei der Einstellung von Achsen einer zu bearbeitenden Fläche gegenüber einer Werkzeugachse, z.B. einer Horizontal-Bohrmaschine, einer Fräsmaschine oder eines Bearbeitungszentrums angewendet werden.

## Ansprüche

1. Traghalterung zur Positionierung und Achseinstellung eines Meßgeräts, insbesondere eines Laserpeilgeräts, bestehend aus einer Grundplatte (1), an deren einer Seite eine ebene Funktionsfläche (10) ausgebildet ist, aus einem an der Grundplatte (1) verstellbar angeordneten Halter (21, 22), der eine definierte Aufnahme für das Meßgerät aufweist, und aus Mitteln zur Befestigung der Grundplatte (1) auf einer Spannfläche (6), **dadurch gekennzeichnet,** daß die Grundplatte (1) auf der Spannfläche (6) über mehrere Stützen (4) abgestützt ist, deren Aufstandsflächen (40) in einer zur Grundplatte (1) parallelen Ebene liegen, und daß in der Grundplatte (1) mindestens drei Stellschrauben (51, 52) senkrecht zur Funktionsebene (10) angeordnet sind, die an ihren unteren Enden in Richtung der magnetischen Spannfläche (6) verstellbare Dauermagneten (5) tragen.

2. Traghalterung nach Anspruch 1, **dadurch gekennzeichnet,** daß zwischen dem Drehkopf (52) jeder Stellschraube (51) und der Grundplatte (1) eine Distanzmutter (53) zur Arretierung der Stellschraube (51) vorgesehen ist.

3. Traghalterung nach Anspruch 1 und 2, **dadurch gekennzeichnet,** daß der Halter (21, 22) in Form einer Hülse (21, 22) mit einer kegelförmigen Aufnahmefläche und einem äußeren Radialflansch ausgebildet ist, der in einer etwa mittigen Ausnehmung (11) in der Grundplatte (1) seitlich verstellbar positioniert ist.

4. Traghalterung nach Anspruch 3, **dadurch gekennzeichnet,** daß die Hülse (21, 22) durch paarweise gegenüberliegende Justierschrauben (30) über Schuhe bzw. Druckstücke (32) parallel zur Funktionsfläche (10) der Grundplatte (1) verstellbar ist.

5. Traghalterung nach den Ansprüchen 1 bis 4, **dadurch gekennzeichnet,** daß die Dauermagneten (5) durch Verdrehen der Stellschrauben (51) in einem Abstand von 0,2 bis 0,5 mm zur Spannfläche (6) einstellbar sind.

6. Traghalterung nach den Ansprüchen 1 bis 5, **dadurch gekennzeichnet,** daß an den Enden von mindestens zwei Stützen (40) je ein Einsatz (41) vorgesehen ist, dessen Kopf (42) in eine Ausnehmung (61) in der Spannfläche (6) formschlüssig eingreift.

A-A

1   10   530   53   52   51   200   22   21   32   33   31   30

7

60≅400   6   5   50   11                    20   5        40   4

D

FIG.1

FIG 2

EP 0 379 918 A2

FIG 2

DETAIL D

41 · 4 · 410 · 5

42 · 61 · 6 · 40 · 50 · 60 · 7

FIG.3